# EUROPÄISCHE PATENTSCHRIFT

(11) **EP 1 667 200 B1**
(45) Veröffentlichungstag und Bekanntmachung des Hinweises auf die Patenterteilung: **12.08.2009**
(21) Anmeldenummer: 05025752.6
(22) Anmeldetag: 25.11.2005
(51) Int. Cl.: H01J 61/56, H05B 41/02

(54) **Hochdruckentladungslampe und Beleuchtungsvorrichtung mit Hochdruckentladungslampe**
High pressure discharge lamp and lighting system using a high pressure discharge lamp
Lampe de décharge à haute pression et système d'illumination utilisant une lampe de décharge à haute pression

(30) Priorität: 06.12.2004 DE 102004058881
(43) Veröffentlichungstag der Anmeldung: 07.06.2006
(73) Patentinhaber: Osram Gesellschaft mit beschränkter Haftung, 81543 München (DE)
(72) Erfinder: Hackenbuchner, Stefan, 80687 München (DE); Hirschmann, Günther, 81735 München (DE); Sroka, Frank, 10439 Berlin (DE)

(56) Entgegenhaltungen:
- WO-A-00/59269
- WO-A-20/04083900
- DE-A1- 19 610 388

## Beschreibung

Die Erfindung betrifft eine Hochdruckentladungslampe gemäß dem Oberbegriff des Patentanspruchs 1.

### I. Stand der Technik

Eine derartige Hochdruckentladungslampe ist beispielsweise in der WO 00/59269 offenbart. Diese Offenlegungsschrift beschreibt eine Hochdruckentladungslampe für einen Kraftfahrzeugscheinwerfer. Die Hochdruckentladungslampe besitzt einen Lampensockel, in dessen Innenraum eine Impulszündvorrichtung zum Zünden der Gasentladung in der Hochdruckentladungslampe angeordnet ist und der von einem auf Massebezugspotential liegenden und zur elektromagnetischen Abschirmung dienenden Metallgehäuse umgeben ist. Außerdem weist die Hochdruckentladungslampe ein Entladungsgefäß auf, das ein sockelnahes und ein sockelfernes Ende besitzt, wobei eine aus dem sockelfernen Ende herausragende Stromzuführung zu dem Lampensockel zurückgeführt ist.

Zum Zünden der Gasentladung in der Hochdruckentladungslampe wird die aus dem sockelnahen Ende herausgeführte Stromzuführung, die durch die Lampengefäße und den Lampensockel vollständig abgekapselt ist, mittels der Impulszündvorrichtung mit Hochspannungsimpulsen von bis zu 30 kV beaufschlagt. Es hat sich gezeigt, dass während der Zündphase an der aus dem sockelfernen Ende des Entladungsgefäßes herausragenden Stromzuführung ein so genannter Rückschlagimpuls auftritt, der an dem mit der vorgenannten Stromzuführung verbundenen Lampenanschluss einen Spannungsimpuls mit einer Amplitude von ca. 1 kV und einer Impulsdauer von ca. 10 ns verursacht.

Die DE 196 10 388 A1 offenbart eine Zündeinrichtung für eine Entladungslampe mit einem induktiven Bauelement in Form eines Tesla-Transformators. Die Bauelemente der Zündeinrichtung sind in einem elektromagnetische Strahlung abschirmenden Gehäuse angeordnet, das einen Sockel der Entladungslampe bilden kann oder als ein Steckerteil ausgebildet sein kann, das mit dem Sockel der Entladungslampe zusammenfügbar ist.

Die WO 2004/083900 A2 offenbart eine Gasentladungslampe mit einer lichtdurchlässigen, elektrisch leitfähigen Beschichtung, die das Entladungsgefäß abschirmt und an eine Abschirmung des elektrischen Systems zum Betreib der Gasentladungslampe angeschlossen ist.

Die WO 00/59269 A1 offenbart eine Gasentladungslampe mit im Sockel angeordneter Zündeinrichtung, deren Komponenten auf einem Trägerteil angeordnet sind.

### II. Darstellung der Erfindung

Es ist Aufgabe der Erfindung, eine gattungsgemäße Hochdruckentladungslampe bereitzustellen, die den oben genannten Nachteil nicht mehr aufweist.

Diese Aufgabe wird erfindungsgemäß durch die Merkmale des Patentanspruchs 1 gelöst. Besonders vorteilhafte Ausführungen der Erfindung sind in den abhängigen Patentansprüchen beschrieben.

Die erfindungsgemäße Hochdruckentladungslampe besitzt einen Lampensockel, in dessen Innenraum eine Zündvorrichtung zum Zünden der Gasentladung in der Hochdruckentladungslampe angeordnet ist und der mit einer elektromagnetischen Abschirmung versehen ist, und einem Entladungsgefäß, das ein sockelnahes und ein sockelfernes Ende besitzt, wobei eine aus dem sockelfernen Ende des Entladungsgefäßes herausragende Stromzuführung zum Lampensockel zurückgeführt ist. Erfindungsgemäß ist die aus dem sockelfernen Ende des Entladungsgefäßes herausragende Stromzuführung elektrisch an die elektromagnetische Abschirmung gekoppelt ist. Dadurch wird der oben erläuterte Rückschlagimpuls zu der elektromagnetischen Abschirmung abgeleitet und es ist gewährleistet, dass der Rückschlagimpuls an dem mit der aus dem sockelfernen Ende des Entladungsgefäßes herausragenden Stromzuführung verbundenen Lampenanschluss während der Zündphase der Hochdruckentladungslampe keinen nennenswerten Spannungsimpuls verursacht.

Die elektrische Kopplung der aus dem sockelfernen Ende des Entladungsgefäßes herausragenden Stromzuführung an die elektromagnetische Abschirmung wird durch eine elektrische Anbindung der vorgenannten Stromzuführung an die elektromagnetische Abschirmung, und zwar mittels eines elektrischen Netzwerks durchgeführt. Dadurch kann die elektrische Anbindung bzw. Kontaktierung vollständig innerhalb der Lampe vorgenommen werden.

Das vorgenannte elektrische Netzwerk umfasst vorzugsweise mindestens eines der Bauteile aus der Gruppe von Kondensator und Schwellwertschalter oder eine Kombination der Bauteile aus dieser Gruppe. Gemäß der besonders bevorzugten Ausführungsbeispiele umfasst das elektrische Netzwerk nur einen Kondensator.

Die Komponenten des vorgenannten elektrischen Netzwerks und vorzugsweise auch der Zündvorrichtung sind auf einem Lead-Frame montiert, um eine einfache Montage der Zündvorrichtung und des elektrischen Netzwerks im Innenraum des Lampensockels zu ermöglichen. Das Lead-Frame gewährleistet ferner eine einfache elektrische Kopplung der aus dem sockelfernen Ende des Entladungsgefäßes herausragenden Stromzuführung an die elektromagnetische Abschirmung. Zu diesem Zweck weist das Lead-Frame einen metallischen Steg auf, der das elektrische Netzwerk mit der elektromagnetischen Abschirmung verbindet.

Die elektromagnetische Abschirmung ist vorteilhafter Weise als Metallgehäuse ausgebildet, das den Lampensockel zumindest partiell umschließt. Das Metallgehäuse besitzt nur auf der dem Entladungsgefäß zugewandten Seite einen Durchbruch für das Entladungsgefäß bzw. für die Lampengefäße und einen weiteren Durchbruch für den elektrischen Anschluss der Hochdruckentladungslampe, um eine möglichst weitgehende elektromagnetische Abschirmung der im Lampensockel untergebrachten

Zündvorrichtung zu erzielen.

Der oben genannte metallische Steg des Lead-Frames ist vorteilhafter Weise derart ausgebildet, dass er im Bereich des elektrischen Anschlusses der Hochdruckentladungslampe aus dem Innenraum des Lampensockels herausragt und mit dem Metallgehäuse in Kontakt steht. Dadurch wird auf einfache Weise ein elektrischer Kontakt zwischen dem elektrischen Netzwerk und dem Metallgehäuse hergestellt. Der metallische Steg kann, ähnlich wie eine Blattfeder, mit Klemmsitz an dem Metallgehäuse anliegen.

Die erfindungsgemäße Hochdruckentladungslampe bildet zusammen mit einem Betriebsgerät, das zur Energieversorgung der Hochdruckentladungslampe und ihrer im Lampensockel untergebrachten Zündvorrichtung dient, eine Beleuchtungsvorrichtung. Die elektromagnetische Abschirmung des Lampensockels, das heißt, das Metallgehäuse, ist vorzugsweise mit dem Massebezugspotential des Betriebsgerätes verbunden. Bei der Beleuchtungsvorrichtung handelt es sich beispielsweise um einen Fahrzeugscheinwerfer. Die elektromagnetische Abschirmung des Lampensockels bzw. das Metallgehäuse kann zusätzlich über eine Lampenhalterung elektrisch leitend mit dem Reflektor des Fahrzeugscheinwerfers verbunden sein, um auch den dann ebenfalls auf Massepotential befindlichen Reflektor für die elektromagnetische Abschirmung der Hochdruckentladungslampe auszunutzen.

### III. Beschreibung der bevorzugten Ausführungsbeispiele

Nachstehend wird die Erfindung anhand von Ausführungsbeispielen näher erläutert. Es zeigen:
- Figur 1: Eine schematische Darstellung des Lead-Frames gemäß des ersten Ausführungsbeispiels für die in Figur 3 abgebildete Zündvorrichtung
- Figur 2: Eine schematische Darstellung des Lead-Frames gemäß des zweiten Ausführungsbeispiels für die in Figur 4 abgebildete Zündvorrichtung
- Figur 3: Eine Schaltskizze der im Lampensockel untergebrachten Zündvorrichtung gemäß des ersten Ausführungsbeispiels
- Figur 4: Eine Schaltskizze der im Lampensockel untergebrachten Zündvorrichtung gemäß des zweiten Ausführungsbeispiels
- Figur 5: Eine Seitenansicht einer Hochdruckentladungslampe gemäß des bevorzugten Ausführungsbeispiels der Erfindung in schematischer Darstellung
- Figur 6: Eine Seitenansicht des Metallgehäuses des Lampensockels der in Figur 5 abgebildeten Hochdruckentladungslampe

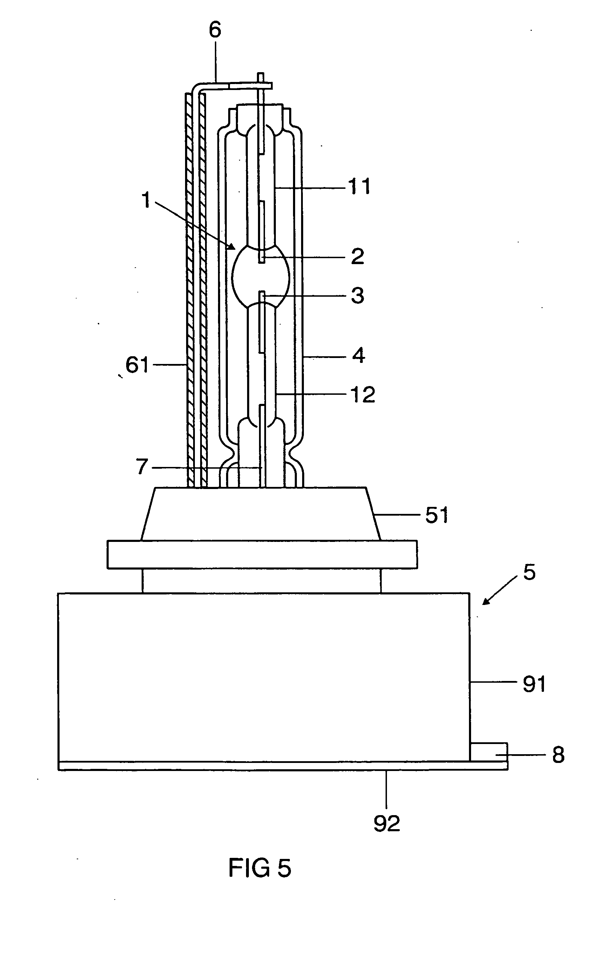

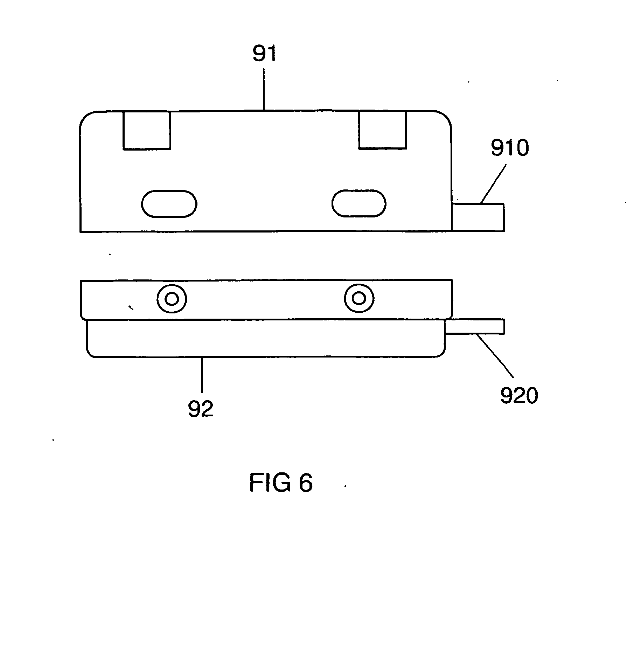

Bei dem in Figur 5 dargestellten bevorzugten Ausführungsbeispiel der Erfindung handelt es sich um eine Halogen-Metalldampf-Hochdruckentladungslampe mit einer elektrischen Leistungsaufnahme von ca. 35 Watt. Diese Hochdruckentladungslampe ist als Lichtquelle für einen Kraftfahrzeugscheinwerfer vorgesehen. Die Hochdruckentladungslampe besitzt ein zweiseitig abgedichtetes Entladungsgefäß 1 aus Quarzglas mit zwei darin angeordneten Elektroden 2, 3 und einer Metallhalogenide enthaltenden, ionisierbaren Füllung zum Erzeugen einer Gasentladung. Das Entladungsgefäß 1 ist von einem gläsernen Außenkolben 4 umgeben. Beide Lampengefäße 1, 4 sind in dem Oberteil 51 eines aus Kunststoff bestehenden Lampensockels 5 fixiert. Die Elektrode 2 ist mittels der aus dem sockelfernen Ende 11 des Entladungsgefäßes herausragenden und zum Lampensockel 5 zurückgeführten Stromzuführung 6 elektrisch kontaktiert, während die Elektrode 3 mittels der aus dem sockelnahen Ende 12 des Entladungsgefäßes 1 herausragenden Stromzuführung 7 elektrisch kontaktiert ist. Der parallel zu den Lampengefäßen 1, 4 verlaufende Anschnitt der Stromzuführung 6 ist von einem isolierenden Keramikrohr 61 umgeben. Der Lampensockel 5 weist eine als elektrischer Anschluss der Hochdruckentladungslampe ausgebildete Buchse 8 auf, die zum Anschluss eines abgeschirmten Kabels vorgesehen ist, das die Hochdruckentladungslampe und die in dem Innenraum des Lampensockels 5 untergebrachte Zündvorrichtung der Hochdruckentladungslampe mit einem Betriebsgerät zur Spannungsversorgung der Hochdruckentladungslampe und der Zündvorrichtung verbindet. Mit Ausnahme seines Oberteils 51 ist der Lampensockel 5 vollständig von einem zweiteiligen Metallgehäuse 91, 92 umgeben, das zur elektromagnetischen Abschirmung der im Lampensockel 5 untergebrachten Zündvorrichtung dient. Details des Metallgehäuses 91, 92 sind in der Figur 6 schematisch dargestellt. Das Metallgehäuse 91, 92 besteht vorzugsweise aus Aluminium oder einer Aluminium-Magnesium-Legierung oder aus verzinktem Stahlblech. Es besitzt ein deckelartiges Unterteil 92 und ein haubenartiges Oberteil 91 mit einem Durchbruch für die Lampengefäße 1, 4 und für das Sockeloberteil 51. Die beiden Gehäuseteile 91, 92 besitzen Wandbereiche 920, 910, welche im montierten Zustand auch die Wand der Buchse 8 umschließen.

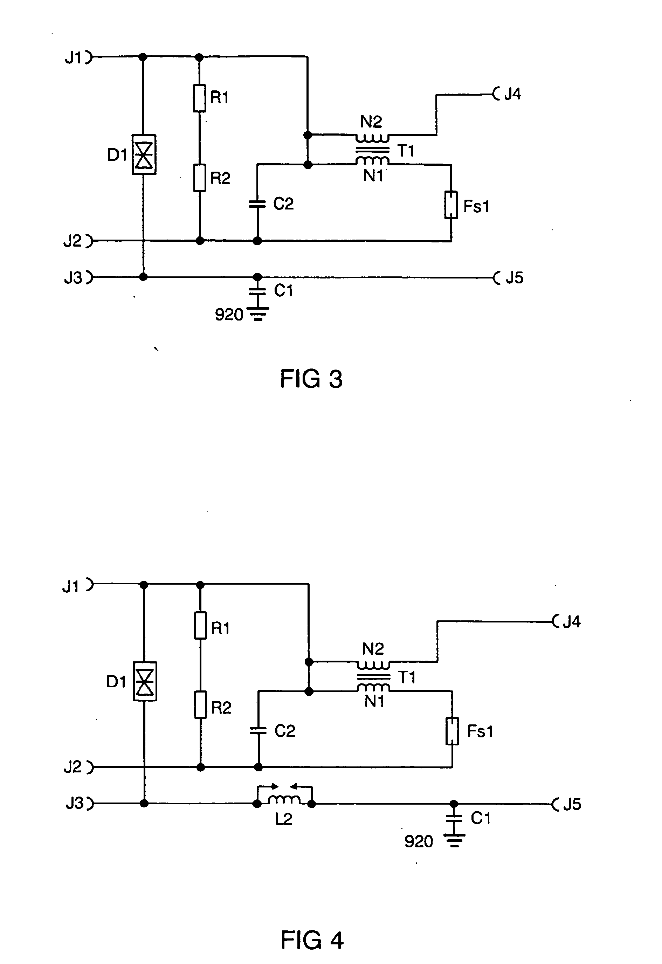

In Figur 3 ist schematisch die Schaltskizze des ersten Ausführungsbeispiels der im Innenraum des Lampensockels 5 untergebrachten Zündvorrichtung dargestellt. Die Zündvorrichtung ist als Impulszündvorrichtung ausgebildet und umfasst einen Zündtransformator T1 mit Primärwicklung N1 und Sekundärwicklung N2 sowie einen Zündkondensator C2, eine Funkenstrecke FS1, zwei Widerstände R1, R2, eine Suppressordiode D1, die Spannungseingänge J1, J2, J3 und die Anschlüsse J4, J5 für die Stromzuführungen 6, 7 der Hochdruckentladungslampe. Von den Spannungseingängen J1, J2, J3 werden die Anschlüsse J1, J2 zur Gleichspannungsversorgung der Zündvorrichtung genutzt und die Anschlüsse J1, J3 dienen nach Beendigung der Zündphase zur Spannungsversorgung der an die Anschlüsse J4, J5 angeschlossenen Hochdruckentladungslampe mittels des an die Buchse 8 angeschlossenen Betriebsgerätes. Der Anschluss J4 ist über die Stromzuführung 7 mit der Elektrode 3 verbunden und der Anschluss J5 ist über die Stromzuführung 6 mit der Elektrode 2 verbunden. Der Anschluss J5 ist über ein elektrisches Netzwerk, das bei diesem Ausführungsbeispiel nur aus dem Kondensator C1, beispielsweise einem Keramikkondensator, besteht, kapazitiv an das Metallgehäuse 92 des Lampensockels 5 gekoppelt.

Während der Zündphase der Hochdruckentladungslampe wird mit Hilfe des Betriebsgerätes (nicht abgebildet) der Zündkondensator C2 aufgeladen. Erreicht die Spannung an dem Zündkondensator C2 die Durchbruchsspannung der Funkenstrecke FS1, so entlädt sich der Zündkondensator C2 und es fließt ein Strom über die Primärwicklung N1 des Zündtransformators T1 und die Funkenstrecke FS1. Dadurch werden in der Sekundärwicklung N2 des Zündtransformators T1 Hochspannungsimpulse induziert, die über den Anschluss J4 und die Stromzuführung 7 der Elektrode 3 zugeführt werden. Diese Hochspannungsimpulse, die eine Amplitude von bis zu 30 kV besitzen, zünden die Gasentladung zwischen den Elektroden 2, 3 in dem Entladungsgefäß 1. Die vorgenannten Hochspannungsimpulse verursachen an der Stromzuführung 6 und dem Anschluss J5 eine so genannte Rückschlagspannung von bis zu 1 kV bei der in Figur 3 dargestellten Schaltung und eine Rückschlagspannung von bis zu 1,8 kV bei der in Figur 4 dargestellten Schaltung, die mittels des Kondensators C1 und seiner Verbindung zum Metallgehäuse 92 bzw. 920 erheblich reduziert wird. Die Suppressordiode D1 dient zur Spannungsbegrenzung an den Anschlüssen J1, J3. Die Serienschaltung der Widerstände R1, R2 ist parallel zum Zündkondensator C2 geschaltet und dient zum Entladen des Zündkondensators C2 nach Beendigung der Zündphase.

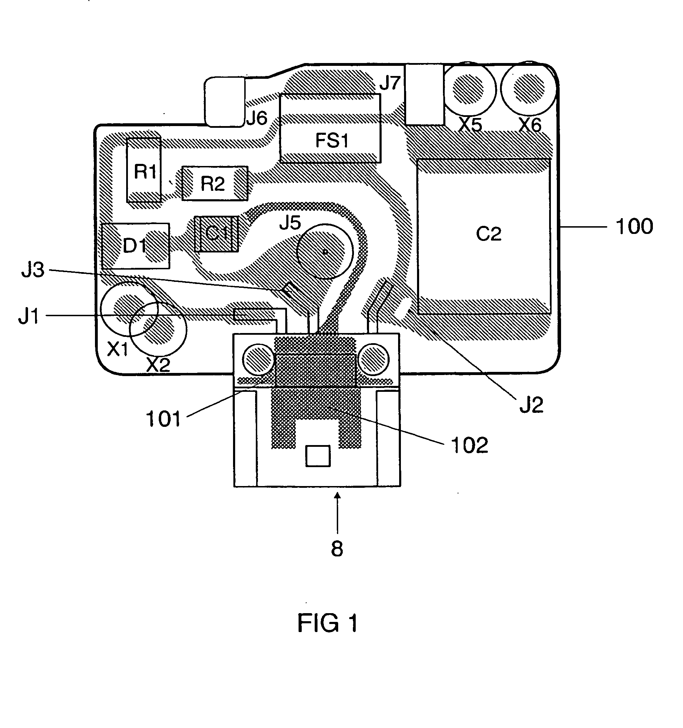

In der Figur 1 ist das Lead-Frame 100 für die in Figur 3 dargestellte Impulszündvorrichtung gemäß dem ersten Ausführungsbeispiel abgebildet. Das ebene Lead-Frame 100 dient als Montageplatine für die Komponenten der Zündvorrichtung. Es besteht aus metallischen Stegen, die in einen elektrisch isolierenden Kunststoff eingebettet sind. Mit Linien und ihren Bezugszeichen sind die Komponenten und Anschlüsse der Zündvorrichtung aus Figur 3 in die Darstellung des Lead-Frames 100 in Figur 1 eingezeichnet. Die Anschlüsse J6, J7 dienen zum Anschluss des Zündtransformators T1. Die Bezugszeichen X1, X2, X5, X6 bezeichnen Durchbrüche im Lead-Frame 100, die zu seiner Montage im Innenraum des Lampensockels 5 dienen. Die Buchse 8 ist auf das Lead-Frame 100 montiert. In den Bereich der Buchse 8 erstreckt sich ein Metallsteg 101, der mit einem Anschluss des Kondensators C1 verbunden ist und der am anderen Ende mit einer breiten metallischen Zunge 102 verbunden ist. Die breite Zunge 102 des Metallstegs 101 ragt über das Lead-Frame 100 und aus dem Innenraum des Lampensockels 5 hinaus und ist im Bereich der Buchse 8 angeordnet. Im montierten Zustand befindet sich die metallische Zunge 102 des Metallstegs 101 im elektrischen und mechanischen Kontakt mit dem Wandteil 920 des Metallgehäuses 92 des Lampensockels 5, das die Buchse 8 abdeckt.

In Figur 4 ist schematisch die Schaltskizze des zweiten Ausführungsbeispiels der im Innenraum des Lampensockels 5 untergebrachten Zündvorrichtung dargestellt. Diese Zündvorrichtung ist weitgehend identisch zur Zündvorrichtung des ersten Ausführungsbeispiels. Daher wurden in den Figuren 3 und 4 für identische Bauteile dieselben Bezugszeichen verwendet. Beim zweiten Ausführungsbeispiel besitzt die Zündvorrichtung zusätzlich eine Funkentstördrossel L2 mit parallel dazu geschalteter Luftfunkenstrecke. Diese Parallelschaltung der Drossel L2 und der Luftfunkenstrecke ist in die Verbindung zwischen die Anschlüsse J3 und J5 geschaltet. Die parallel zur Drossel L2 angeordneten Luftfunkenstrecke dient zum Überspannungsschutz der Drossel L2. Das elektrische Netzwerk zur Kopplung des Anschlusses J5 bzw. der Stromzuführung 6 an das Metallgehäuse 92 besteht bei dem zweiten Ausführungsbeispiel ebenfalls nur aus dem Kondensator C1. Der Kondensator C1 ist bei beiden Ausführungsbeispielen als Keramikkondensator mit einer Kapazität von 500 pF ausgebildet. In der in Figur 4 dargestellten Schaltung kann die Reihenfolge des Kondensators C1 und der aus der Drossel L2 und der Luftfunkenstrecke bestehenden Parallelschaltung auch vertauscht werden, so dass der Anschluss J5 über die Drossel L2 mit dem Kondensator C1 verbunden ist.

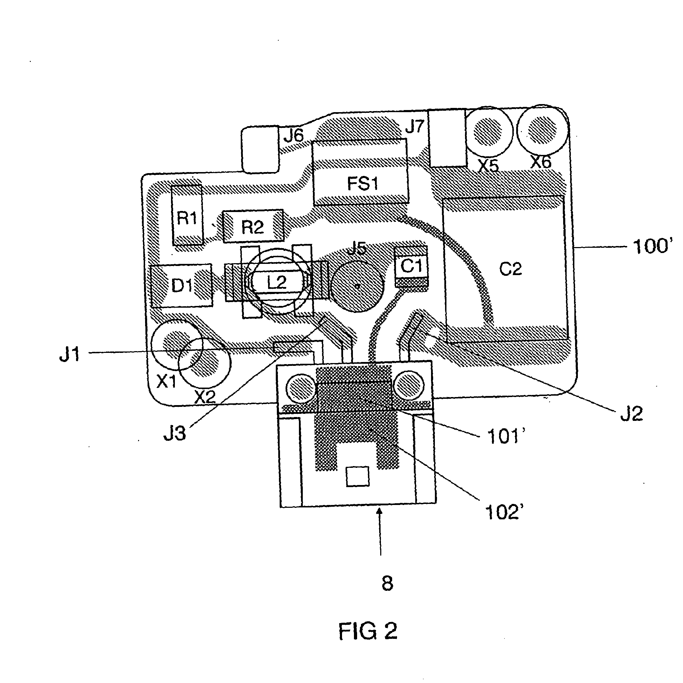

In der Figur 2 ist das Lead-Frame 100' für die in Figur 4 dargestellte Impulszündvorrichtung gemäß dem zweiten Ausführungsbeispiel abgebildet. Das ebene Lead-Frame 100' dient als Montageplatine für die Komponenten der Zündvorrichtung gemäß dem zweiten Ausführungsbeispiel. Es besteht aus metallischen Stegen, die in einen elektrisch isolierenden Kunststoff eingebettet sind. Mit Linien und ihren Bezugszeichen sind die Komponenten und Anschlüsse der Zündvorrichtung aus Figur 4 in die Darstellung des Lead-Frames 100' in Figur 2 eingezeichnet. Das Lead-Frame 100' aus Figur 2 ist weitgehend identisch mit dem Lead-Frame 100 aus Figur 1. Daher wurden in den Figuren 1 und 2 für identische Komponenten dieselben Bezugszeichen verwendet. Im Bereich der Buchse 8 ist ein Metallsteg 101' mit einer breiten Zunge 102' angeordnet, der mit einem Anschluss des Kondensators C1 verbunden ist. Die breite Zunge 102' des Metallstegs 101', die über das Lead-Frame 100' und aus dem Innenraum des Lampensockels 5 hinausragt, ist im Bereich der Buchse 8 angeordnet. Im montierten Zustand befindet sich die breite Zunge des Metallstegs 101' im elektrischen und mechanischen Kontakt mit dem Wandteil 920 des Metallgehäuses 92 des Lampensockels 5.

Die Erfindung beschränkt sich nicht auf die oben näher erläuterten Ausführungsbeispiele. Beispielsweise kann anstelle des Kondensators C1 in den in Figur 3 und 4 dargestellten Ausführungsbeispielen auch eine Suppressordiode mit einer Durchbruchsspannung von beispielsweise 200 V verwendet werden. Die elektrische Verbindung zwischen dem Kondensator C1 und dem Metallgehäuse 91, 92 kann anstelle der Metallzunge 102 bzw. 102' auch mit Hilfe eines elektrisch leitfähigen Gummis durchgeführt werden, das auf dem Metallsteg 101 bzw. 101' des Lead-Frames 100 bzw. 100' aufliegt und durch einen Durchbruch in der Wand des Lampensockels 5 an dem Metallgehäuse 91, 92 anliegt. Die komplexer geformten Metallstege des Lead-Frames 100 bzw. 100', beispielsweise der Steg zwischen dem Kondensator C1 und der Zunge 102 bzw. 102', können als Tiefziehteile ausgebildet sein.

## Patentansprüche

1. Hochdruckentladungslampe mit einem Lampensockel (5), in dessen Innenraum eine Zündvorrichtung zum Zünden der Gasentladung in der Hochdruckentladungslampe angeordnet ist und der mit einer elektromagnetischen Abschirmung (91, 92) versehen ist, und einem Entladungsgefäß (1), das ein sockelnahes (12) und ein sockelfernes Ende (11) besitzt, wobei eine aus dem sockelfernen Ende (11) des Entladungsgefäßes (1) herausragende Stromzuführung (6) zum Lampensockel (5) zurückgeführt und mittels eines elektrischen Netzwerks (C1) elektrisch an ein als elektromagnetische Abschirmung ausgebildetes Metallgehäuse (91, 92) des Lampensockels (5) gekoppelt ist,
**dadurch gekennzeichnet, dass**
die Komponenten des elektrischen Netzwerks (C1) auf einem Lead-Frame (100) montiert sind, das einen metallischen Steg (101, 102) aufweist, der aus dem Innenraum des Lampensockels (5) herausgeführt ist und im Bereich eines elektrischen Anschlusses (8) der Hochdruckentladungslampe mit dem Metallgehäuse (91, 92) in Kontakt steht und der das elektrische Netzwerk (C1) mit dem Metallgehäuse (91, 92) elektrisch leitend verbindet.

2. Hochdruckentladungslampe nach Anspruch 1, **dadurch gekennzeichnet, dass** das elektrische Netzwerk mindestens einen Kondensator (C1) umfasst.

3. Hochdruckentladungslampe nach Anspruch 1, **dadurch gekennzeichnet, dass** das elektrische Netzwerk mindestens einen Schwellwertschalter umfasst.

4. Hochdruckentladungslampe nach Anspruch 1, **dadurch gekennzeichnet, dass** die Komponenten der Zündvorrichtung auf dem Lead-Frame (100) montiert sind.

5. Beleuchtungsvorrichtung, insbesondere Fahrzeugscheinwerfer, mit einer Hochdruckentladungslampe gemäß einem oder mehreren der Ansprüche 1 bis 4 und einem Betriebsgerät für die Hochdruckentladungslampe, wobei das als elektromagnetische Abschirmung ausgebildete Metallgehäuse (91, 92) mit dem Massebezugspotential des Betriebsgerätes verbunden ist.

## Claims

1. High-pressure discharge lamp having a lamp base (5), in whose interior is arranged a starting apparatus for the purpose of starting the gas discharge in the high-pressure discharge lamp and which is provided with an electromagnetic shield (91, 92), and having a discharge vessel (1) which has an end (12) near to the base and an end (11) remote from the base, a power supply line (6) protruding out of the end (11), remote from the base, of the discharge vessel (1) being passed back to the lamp base (5) and being coupled electrically, by means of an electrical network (C1), to a metal housing (91,92), in the form of an electromagnetic shield, of the lamp base (5), **characterized in that** the components of the electrical network (C1) are mounted on a leadframe (100), which has a metallic web (101, 102) which is passed out of the interior of the lamp base (5) and is in contact with the metal housing (91, 92) in the region of an electrical connection (8) of the high-pressure discharge lamp and which electrically conductively connects the electrical network (C1) to the metal housing (91,92).

2. High-pressure discharge lamp according to Claim 1, **characterized in that** the electrical network comprises at least one capacitor (C1).

3. High-pressure discharge lamp according to Claim 1, **characterized in that** the electrical network comprises at least one threshold value switch.

4. High-pressure discharge lamp according to Claim 1, **characterized in that** the components of the starting apparatus are mounted on the leadframe (100).

5. Illumination apparatus, in particular a vehicle headlight, having the high-pressure discharge lamp according to one or more of Claims 1 to 4 and an operating device for the high-pressure discharge lamp, the metal housing (91,92) in the form of an electromagnetic shield being connected to the ground reference potential of the operating device.

## Revendications

1. Lampe à décharge à haute pression comprenant un culot ( 5 ) de lampe à l'intérieur duquel est disposé un dispositif d'amorçage de la décharge dans un gaz dans la lampe à décharge à haute pression et qui est muni d'un blindage ( 91, 92 ) électromagnétique, et une enceinte ( 1 ) de décharge, qui a une extrémité ( 12 ) proche du culot et une extrémité ( 11 ) éloignée du culot, dans laquelle une entrée ( 6 ) de courant sortant de l'extrémité ( 11 ) éloignée du culot de l'enceinte ( 1 ) de décharge retourne au culot ( 5 ) de la lampe et est couplée au moyen d'un réseau ( C1 ) électrique électriquement à un boîtier ( 91, 92 ) métallique du culot ( 5 ) de la lampe constitué en blindage électromagnétique,
**caractérisé en ce**
les composants du réseau ( C1 ) électrique sont montés sur une lead-frame ( 100 ) qui a une partie pleine ( 101, 102 ) métallique qui sort de l'intérieur du culot ( 5 ) de la lampe et est en contact avec le boîtier ( 91, 92 ) métallique dans la zone d'une borne ( 8 ) électrique de la lampe à décharge à haute pression et qui relie d'une manière conductrice de l'électricité le réseau ( C1 ) électrique au boîtier ( 91, 92 ) métallique.

2. Lampe à décharge à haute pression suivant la revendication 1, **caractérisé en ce que** le réseau électrique comprend au moins un condensateur ( C1 ).

3. Lampe à décharge à haute pression suivant la revendication 1, **caractérisé en ce que** le réseau électrique comprend au moins un commutateur à valeur de seuil.

4. Lampe à décharge à haute pression suivant la revendication 1, **caractérisé en ce que** les composants du dispositif d'amorçage sont montés sur la lead-frame ( 100 ).

5. Dispositif d'éclairage notamment phare de véhicule automobile comprenant une lampe à décharge à haute pression suivant l'une ou plusieurs revendications 1 à 4, et un appareil pour faire fonctionner la lampe à décharge à haute pression dans lequel le boîtier ( 91, 92 ) métallique constitué en blindage électromagnétique est relié au potentiel de référence de masse de l'appareil pour le faire fonctionner la lampe à décharge la lampe à haute pression.
